(19) Europäisches Patentamt
European Patent Office
Office européen des brevets

(11) EP 4 808 004 A1

(12) EUROPEAN PATENT APPLICATION
published in accordance with Art. 153(4) EPC

(43) Date of publication:
**16.09.2026 Bulletin 2026/38**

(21) Application number: **23961569.3**

(22) Date of filing: **11.12.2023**

(51) International Patent Classification (IPC):
***H04B 7/0417** (2017.01)* ***G06F 17/16** (2006.01)*
***H04W 88/08** (2009.01)*

(52) Cooperative Patent Classification (CPC):
**G06F 17/16; H04B 7/0417; H04W 88/08**

(86) International application number:
**PCT/KR2023/020310**

(87) International publication number:
**WO 2025/127166 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Samsung Electronics Co., Ltd.**
**Suwon-si, Gyeonggi-do 16677 (KR)**

(72) Inventors:
- **KIM, Youngjoon**
  **Suwon-si, Gyeonggi-do 16677 (KR)**
- **YOON, Daejung**
  **Suwon-si, Gyeonggi-do 16677 (KR)**
- **PARK, Jaebum**
  **Suwon-si, Gyeonggi-do 16677 (KR)**
- **YANG, Jiyeong**
  **Suwon-si, Gyeonggi-do 16677 (KR)**
- **JEONG, Chanuk**
  **Suwon-si, Gyeonggi-do 16677 (KR)**

(74) Representative: **HGF**
**HGF Limited**
**4th Floor, 1 City Square**
**Leeds LS1 2ES (GB)**

# (54) SINGULAR VALUE DECOMPOSITION (SVD)-BASED PORT COMBINING SIGNALING METHOD AND DEVICE IN COMMUNICATION SYSTEM

(57) The present disclosure relates to a 5G or 6G communication system for providing a higher data transmission rate than a 4G communication system, such as LTE. In addition, the present disclosure relates to a method performed by a remote unit (RU) in a wireless communication system, comprising the steps of: receiving a port combining configuration from a digital unit (DU); determining whether to perform singular value decomposition (SVD) port combining on the basis of the port combining configuration; transmitting an indication indicating the SVD port combining to the DU when the SVD port combining is performed; and transmitting, to the DU, a signal to which the SVD port combining is applied, wherein the indication is used to decode the signal.

FIG. 7

RU
DU
Capability Request
710
RU Capability Info.
720
Port Combining Config.
730
Port Combining Enable
740
Port Combining Indication
750
Transmit I/Q data
760
Transmit singular value
770

EP 4 808 004 A1

## Description

[Technical Field]

The disclosure relates to an operation of a terminal and a base station in a wireless communication system. More specifically, the disclosure relates to a method and a device of a terminal and a base station for port combining signaling for a DU (open RAN digital unit) in a wireless communication system using SVD.

[Background Art]

A review of the development of wireless communication from generation to generation shows that the development has mostly been directed to technologies for services targeting humans, such as voice-based services, multimedia services, and data services. It is expected that connected devices which are exponentially increasing after commercialization of 5th generation (5G) communication systems will be connected to communication networks. Examples of things connected to networks may include vehicles, robots, drones, home appliances, displays, smart sensors installed in various infrastructures, construction machines, factory equipment, and the like. Mobile devices are expected to evolve into various formfactors, such as augmented reality glasses, virtual reality headsets, and hologram devices. In order to provide various services by connecting hundreds of billions of devices and things in the 6th-generation (6G) era, there have been ongoing efforts to develop improved 6G communication systems. For these reasons, 6G communication systems are referred to as "beyond-5G" systems.

6G communication systems, which are expected to be implemented approximately by 2030, will have a maximum transmission rate of tera (1,000 giga)-level bps and a radio latency of 100 μ sec. That is, 6G communication systems will be 50 times as fast as 5G communication systems and have the 1/10 radio latency thereof.

In order to accomplish such a high data transmission rate and an ultra-low latency, it has been considered to implement 6G communication systems in a terahertz band (for example, 95GHz to 3THz bands). It is expected that, due to severer path loss and atmospheric absorption in the terahertz bands than those in mmWave bands introduced in 5G, a technology capable of securing the signal transmission distance (that is, coverage) will become more crucial. It is necessary to develop, as major technologies for securing the coverage, multiantenna transmission technologies including radio frequency (RF) elements, antennas, novel waveforms having a better coverage than OFDM, beamforming and massive MIMO, full dimensional MIMO (FD-MIMO), array antennas, and large-scale antennas. In addition, there has been ongoing discussion on new technologies for improving the coverage of terahertz-band signals, such as metamaterial-based lenses and antennas, orbital angular momentum (OAM), and reconfigurable intelligent surface (RIS).

Moreover, in order to improve the frequency efficiencies and system networks, the following technologies have been developed for 6G communication systems: a full-duplex technology for enabling an uplink (UE transmission) and a downlink (node B transmission) to simultaneously use the same frequency resource at the same time; a network technology for utilizing satellites, high-altitude platform stations (HAPS), and the like in an integrated manner; a network structure innovation technology for supporting mobile nodes B and the like and enabling network operation optimization and automation and the like; a dynamic spectrum sharing technology though collision avoidance based on spectrum use prediction, an artificial intelligence (AI)-based communication technology for implementing system optimization by using AI from the technology design step and internalizing end-to-end AI support functions; and a next-generation distributed computing technology for implementing a service having a complexity that exceeds the limit of UE computing ability by using super-high-performance communication and computing resources (mobile edge computing (MEC), clouds, and the like). In addition, attempts have been continuously made to further enhance connectivity between devices, further optimize networks, promote software implementation of network entities, and increase the openness of wireless communication through design of new protocols to be used in 6G communication systems, development of mechanisms for implementation of hardware-based security environments and secure use of data, and development of technologies for privacy maintenance methods.

It is expected that such research and development of 6G communication systems will enable the next hyper-connected experience in new dimensions through the hyper-connectivity of 6G communication systems that covers both connections between things and connections between humans and things. Specifically, it is expected that services such as truly immersive XR, high-fidelity mobile holograms, and digital replicas could be provided through 6G communication systems. In addition, with enhanced security and reliability, services such as remote surgery, industrial automation, and emergency response will be provided through 6G communication systems, and thus these services will be applied to various fields including industrial, medical, automobile, and home appliance fields.

[Disclosure of Invention]

[Technical Problem]

The disclosure is to provide an apparatus and a method capable of effectively providing services in a wireless communication system. The disclosure provides a method and a device in which an RU in an O-RAN indicates a used port combining method to a DU, thereby improving communication performance and fronthaul (hereinafter, FH) resource utilization efficiency in a wireless communication system.

The technical subjects pursued in the disclosure may not be limited to the above-mentioned technical subjects, and other technical subjects which are not mentioned herein may be clearly understood from the following description by those skilled in the art to which the disclosure pertains.

[Solution to Problem]

A method performed by a remote unit (RU) in a wireless communication system according to an embodiment of the disclosure may include receiving a port combining configuration from a digital unit (DU), identifying whether to perform singular value decomposition (SVD) port combining, based on the port combining configuration, in case that the SVD port combining is performed, transmitting, to the DU, an indication indicating the SVD port combining, and transmitting a signal to which the SVD port combining has been applied to the DU, wherein the indication is used for decoding the signal.

A method performed by a digital unit (DU) in a wireless communication system according to an embodiment of the disclosure may include transmitting a port combining configuration to a remote unit (RU), in case that singular value decomposition (SVD) port combining identified based on the port combining configuration is performed, receiving an indication indicating the SVD port combining from the RU, receiving a signal to which the SVD port combining has been applied from the RU, and decoding the signal, based on the indication.

A remote unit (RU) in a wireless communication system according to an embodiment of the disclosure may include a transceiver and a controller connected to the transceiver, wherein the controller is configured to receive a port combining configuration from a digital unit (DU), identify whether to perform singular value decomposition (SVD) port combining, based on the port combining configuration, in case that the SVD port combining is performed, transmit, to the DU, an indication indicating the SVD port combining, and transmit a signal to which the SVD port combining has been applied to the DU, wherein the indication is used for decoding the signal.

A digital unit (DU) in a wireless communication system according to an embodiment of the disclosure may include a transceiver and a controller connected to the transceiver, wherein the controller is configured to transmit a port combining configuration to a remote unit (RU), in case that singular value decomposition (SVD) port combining identified based on the port combining configuration is performed, receive an indication indicating the SVD port combining from the RU, receive a signal to which the SVD port combining has been applied from the DU, and decode the signal, based on the indication.

[Advantageous Effects of Invention]

The disclosure provides a method and a device in which port combining used in a data transmission and reception process between an RU and a DU in an O-RAN network environment is indicated by the RU to the DU, thereby enabling more suitable and effective performing of a wireless communication system service in a 6G environment.

Advantageous effects obtainable from the disclosure may not be limited to the above-mentioned effects, and other effects which are not mentioned herein may be clearly understood from the following description by those skilled in the art to which the disclosure pertains.

[Brief Description of Drawings]

FIG. 1 is a diagram illustrating an architecture of an O-RAN.
FIG. 2 is a diagram illustrating a wireless communication system using MIMO technology.
FIG. 3 is a diagram illustrating a method using an MRC port combining method.
FIG. 4 is a diagram illustrating a process of performing SVD-based port combining between an RU and a DU.
FIG. 5 is a diagram illustrating a matrix inversion process in a DU.
FIG. 6 is a diagram illustrating a low-complexity matrix inversion process in a DU.
FIG. 7 is a diagram illustrating a process of performing port combining between an RU and a DU according to an embodiment of the disclosure.
FIG. 8 is a diagram illustrating a port combining signaling process of an RU according to an embodiment of the disclosure.
FIG. 9 is a diagram illustrating a port combining signaling process of a DU according to an embodiment of the

disclosure.

FIG. 10 illustrates RU and DU devices in a wireless communication system according to an embodiment of the disclosure.

[Mode for the Invention]

Hereinafter, embodiments of the disclosure will be described with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are provided with the same or like reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware,

micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more central processing units (CPUs) within a device or a security multimedia card. Furthermore, the "unit" in embodiments may include one or more processors. In the following description, the term "a/b" may be understood as at least one of a and b.

Furthermore, in the following description of various embodiments, systems based on LTE, LTE-A, NR, or 6G may be described by way of example, but various embodiments of the disclosure may also be applied to other communication systems having similar technical backgrounds or channel types. Moreover, based on determinations by those skilled in the art, various embodiments of the disclosure may also be applied to other communication systems through some modifications without significantly departing from the scope of the embodiments of the disclosure.

In the following description, some of terms and names defined in the 3rd generation partnership project (3GPP) standards (standards for 5G, NR, LTE, or similar systems) may be used for the sake of descriptive convenience. In addition, terms and names used in existing communication systems or newly defined in next-generation communication systems (e.g., 6G and beyond-5G systems) to which the disclosure is applicable may also be used. Use of these terms is not intended to limit the disclosure by the terms and names, and the disclosure may be applied in the same way to systems that conform other standards, and may be changed into other forms without departing from the technical idea of the disclosure. Various embodiments of the disclosure may also be easily applied to other communication systems through modifications.

In recent years, wireless communication technology has made considerable progress and provides faster data speeds, improved application range, and more stable connections. However, as the demand for wireless communication services continues to increase, there remain many issues to be resolved, such as network congestion, signal interference, and dynamic changes in the network state.

The disclosure relates to an open-RAN (O-RAN) system, and in particular, to a signaling method and device in which, during a transmission and reception process between a wireless signal processing device (remote unit, hereinafter, RU) in an O-RAN and a digital data processing device (digital unit, hereinafter, DU) in the O-RAN, the RU uses SVD-based port combining to improve communication performance and FH resource utilization efficiency.

Hereinafter, an RU and a DU in the disclosure are assumed to be an RU and a DU in an O-RAN network. Depending on the situation, an RU may be understood as an O-RU, and a DU may be understood as an O-DU. However, the network of the disclosure is not limited to an O-RAN, and the disclosure may be applied even in a case where an RU and a DU are included in other networks.

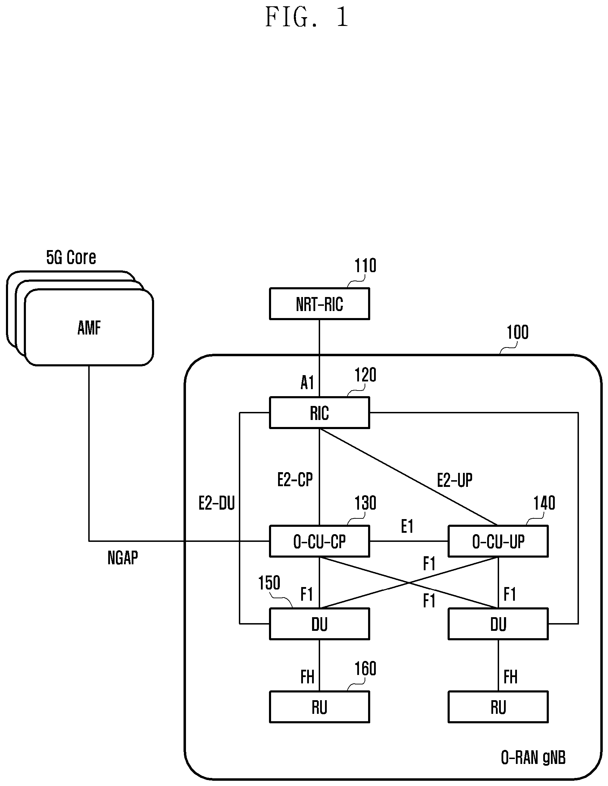

FIG. 1 is a diagram illustrating an architecture of an O-RAN.

According to FIG. 1, an O-RAN network is a standard in which functions of an eNB and a gNB of legacy 4G and 5G systems are logically separated, and, in the O-RAN standard, a NRT-RIC 110, and an RIC 120, a CU-CP 130, a CU-UP 140, a DU 150, and an RU 160 within an O-RAN gNB 100 are defined.

The NRT-RIC 110 is a logical node that enables non-real-time control, optimization of RAN elements and resources, model training and updating, and the like. The newly defined RIC 120 is a logical node that enables near-real-time control and optimization of RAN elements and resources, based on data collected from the DU 150, the CU-CP 130, and the CU-UP 140 via an E2 interface on servers centrally placed in one physical location. The CU including the CU-CP 130 and the CU-UP 140 is a logical node providing functions of a radio resource control (RRC), a service data adaptation protocol (SDAP), and a packet data convergence protocol (PDCP). The CU-CP 130 is a logical node providing functions of the control plane part of the RRC and the PDCP, and the CU-UP 140 is a logical node providing functions of the user plane part of the SDAP and the PDCP. The CU-CP 130 is connected to an access and mobility management function (AMF) included in a 5G network (5G core) through an NGAP interface. The DU 150 is a logical node that provides functions of an RLC, a MAC, and a higher physical layer (high-PHY), and the RU 160 connected to the DU 150 is a logical node that provides lower physical layer (low-PHY) functions and RF processing. Although each logical node is illustrated as a singular instance in FIG. 1, each logical node may be connected to multiple logical nodes, and, for example, multiple RUs 160 may be connected to one DU 150, and multiple DUs 150 may be connected to one CU-UP 140.

The disclosure is not limited by the names of the nodes described above, and a configuration of the disclosure may be applied to a logical node or an entity that performs the functions described above. In addition, the logical nodes may be located at the same or different physical locations, and functions of the logical nodes may be provided by the same physical device (e.g., a processor or a controller) or by different physical devices. For example, a function of at least one of the logical nodes described above may be provided in a single physical device through virtualization. Hereinafter, a DU may be interchangeably used as an O-DU, and an RU may be interchangeably used as an O-RU.

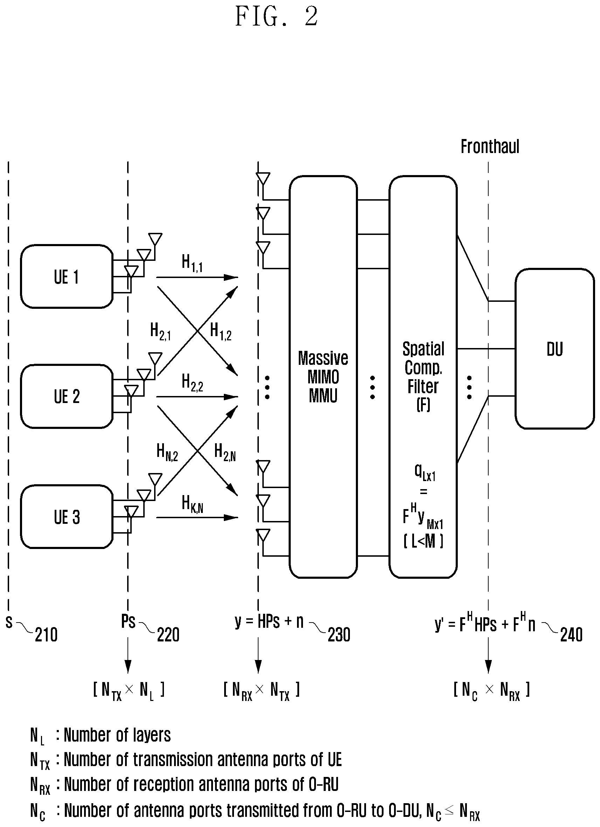

FIG. 2 is a diagram illustrating a wireless communication system using MIMO technology.

In a wireless communication system, as multiple input multiple output (MIMO) technology is used, the number of used antennas may be increased. Referring to FIG. 2, UE 1, UE 2, ..., and UE K may transmit and receive signals by using MIMO. Information that a UE is to transmit to the RU may be, for example, s 210.

The information may be multiplied by a P value corresponding to a precoder. A signal generated at this time, for

example, Ps 220, may be a signal transmitted from each antenna port of the UE. Here, the generated signal Ps may have a dimension of N_TX by N_L. N_TX may indicate the number of antenna ports, and N_L may indicate the number of layers.

The RU of a base station may receive a signal by using a reception antenna port. The received signal may be expressed as y=HPs+n 230. Here, H may be a channel through which the signal has passed, and the dimension of H may be N_RX by N_TX. N_RX may refer to the number of reception antenna ports of the RU.

The RU of the base station may transfer a signal (y') 240 to the DU by using a fronthaul (FH) that is a link (or interface) connecting the RU and the DU. Specifically, y' may be a result of multiplying y by an F^H value. Here, the dimension of F^H may be N_C by N_RX. N_C may be the number of antenna ports transmitted from the RU to the DU. N_C may be less than or equal to N_RX.

As such, as the number of antennas used increases in accordance with the use of MIMO, the amount of data transmitted from the RU to the DU may increase.

When the volume of data transmitted from the RU to the DU through the FH increases, the capacity required for the FH may increase, and the disclosure provides a method for solving the same.

Specifically, to solve the problem of excessive FH capacity requirements, port combining may be used to efficiently utilize FH resources. Port combining may refer to a scheme for using a small number of data streams transmitted between the RU and the DU. For example, when it is determined that there is no significant loss in data to be transmitted, not all data streams corresponding to the number of RU reception antennas are transmitted, but only a part of the data streams may be transmitted. When the number of data streams transmitted from the RU to the DU is reduced through port combining, the volume of data transmitted to the FH may be reduced.

As an example of a method for applying port combining, a maximum ratio combining (MRC) method may be used.

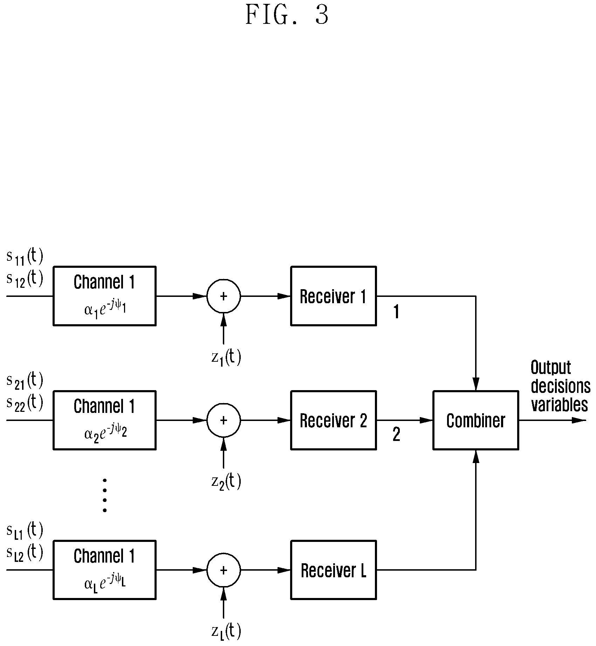

FIG. 3 is a diagram illustrating a method using an MRC port combining method.

Specifically, in the MRC port combining method, combining may be performed in a manner of multiplying reception signals received through different antenna ports by weight values reflecting signal-to-noise ratio (SNR) weights, and maximizing the SNR of the entire signal combined by adding the reception signals multiplied by the weight values.

In addition, DFT-based port combining may be considered as another method of port combining. In order to perform DFT-based port combining, a projection matrix may be used. Specifically, the RU may determine a projection matrix, based on a codebook, and transmit, to the DU, a DMRS symbol and a signal obtained by applying the projection matrix to a signal received from a UE. The DU may calculate, generate, and apply a combiner matrix by using the DMRS symbol. Since the DFT-based port combining determines a projection matrix based on a codebook, a port combining weight may be determined in a predefined set.

If port combining is used in an environment in which only a single layer is used, it may be common to use the MRC port combining method. However, in the current communication system, a multi-layer uplink operation may be supported. As an environment such as X-MIMO is gradually established, a UE supporting multi-layer uplink may be popularized. However, when SVD-based port combining is applied in an environment using multi-layer uplink, there is a problem in that although the performance gain is very large, the computational complexity is high. Therefore, the disclosure proposes a method of efficiently performing SVD-based port combining.

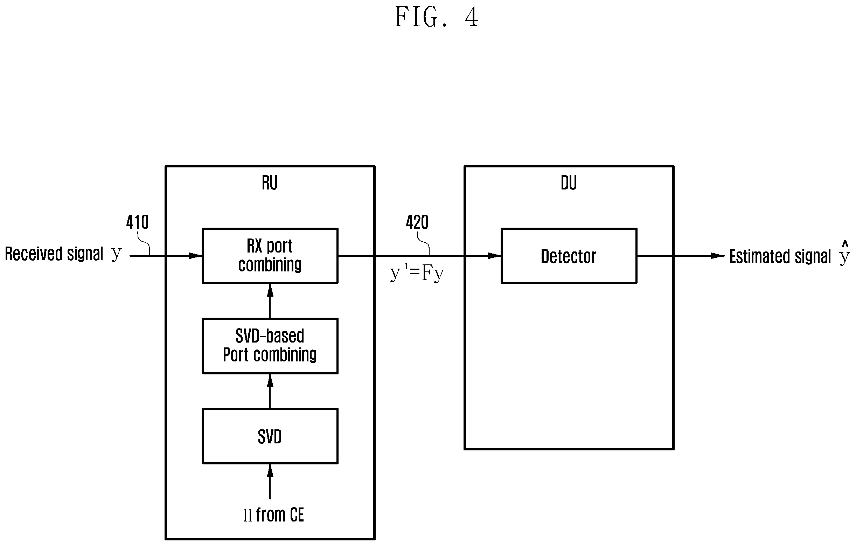

FIG. 4 is a diagram illustrating a process of performing port combining between an RU and a DU.

According to FIG. 4, in operation 410, the RU may receive a signal (y).

In addition, the RU may obtain H through channel estimation (CE). Here, H is a channel matrix, which may reflect changes that have occurred while a signal passes through a channel in a wireless communication environment.

The RU may perform SVD-based port combining for the reception signal. Specifically, the RU may obtain a weight for SVD-based port combining, and perform SVD-based port combining, based on the weight. The weight for SVD-based port combining may be obtained according to Equation 1 below.

[Equation 1]

$$H = U\sum V^H$$

When SVD is performed for the channel matrix H, H may be decomposed into $U\Sigma V^H$. Here, a U matrix obtained through the SVD, or a value determined based on the U matrix, may be used as a weight value (F) in SVD-based port combining. The U matrix may be defined as a value or matrix obtained by performing SVD for a channel. A signal y' acquired through port combining (e.g., RX port combining) may be obtained by multiplying the reception signal y by F corresponding to a port combining filter value according to Equation 2 below.

[Equation 2]

$$y' = Fy$$

The RU may transmit y' corresponding to a combined signal to the DU in operation 420.

The DU that has received y' may estimate the original signal y through a detector. The DU having acquired an estimated signal y may transmit the signal to a network.

When SVD-based port combining is used, an F value may be determined to satisfy Equation 3 below.

[Equation 3]

$$\mathbf{F} = \mathbf{arg}\max_{\mathbf{F}}[\log \boldsymbol{det}(\boldsymbol{N_o}\mathbf{F}^{\boldsymbol{H}}\mathbf{F} + \mathbf{F}^{\boldsymbol{H}}\mathbf{H}\mathbf{R}_s\mathbf{H}^{\boldsymbol{H}}\mathbf{F}) - \log \boldsymbol{det}(\boldsymbol{N_o}\mathbf{F}^{\boldsymbol{H}}\mathbf{F})]$$

Equation 3 above indicates that an F value may be determined to maximize an SNIR, but does not indicate the F value itself. By determining the F value to maximize the SNIR as described above, the channel capacity may be maximized. However, as described above, when SVD-based port combining is used, there is a problem that the computational complexity is high. Therefore, the disclosure proposes a method of efficiently performing SVD-based port combining.

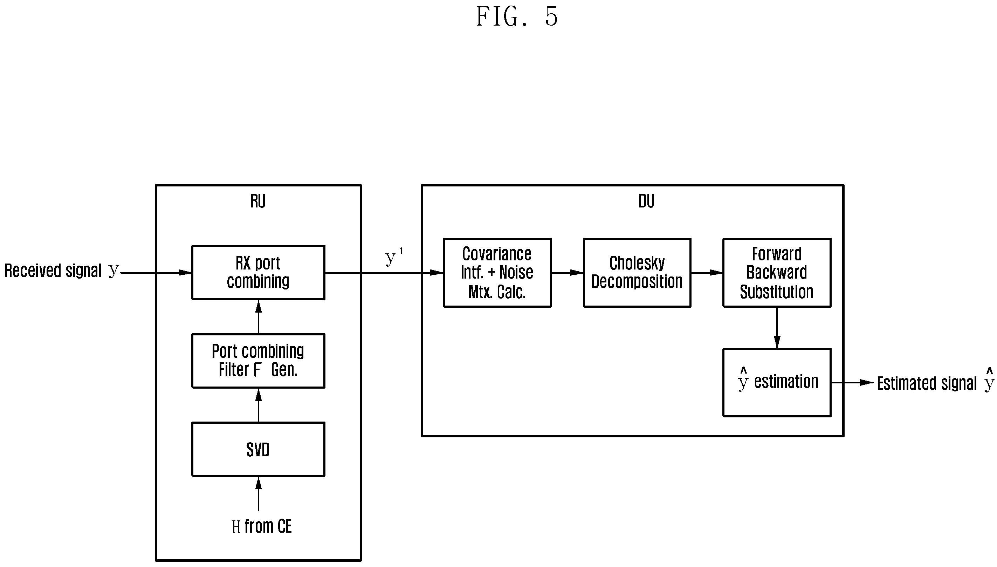

FIG. 5 is a diagram illustrating a matrix inversion process in a DU.

The RU may receive a signal (y), and may perform port combining for the received signal to transmit y' to the DU. A detailed description thereof is the same as in FIG. 4, and thus will be omitted hereinafter.

As illustrated in FIG. 4, the DU may receive y' and acquire an estimated signal $\hat{y}$ through a particular process, and transmit the signal to a network entity.

FIG. 5 illustrates a process in which the DU that has received y' acquires an estimated signal $\hat{y}$ through a detection operation including matrix inversion. The matrix inversion process may include a process of performing forward backward substitution through Cholesky decomposition. However, the matrix inversion process as in FIG. 5 has a problem in that the computation is very complex.

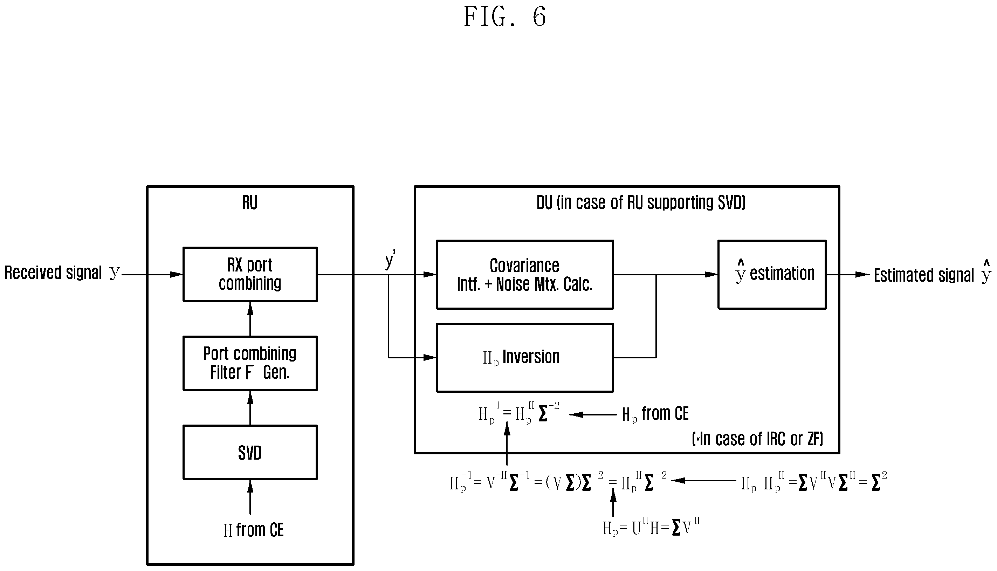

FIG. 6 is a diagram illustrating a low-complexity matrix inversion process in a DU.

When an SVD-based port combining method is used, there is a problem that the computational complexity is high when a general matrix inversion is used. However, in a case of using SVD-based port combining, a low-complexity matrix inversion may be performed through a process as shown in FIG. 6.

Specifically, the DU may determine a $H_p^{-1}$ value through matrix inversion. That is, in a process of performing a zero-forcing (ZF) operation or an interference rejection combining (IRC) operation, the DU may perform low-complexity channel matrix inversion. $H_p^{-1}$ may be obtained according to Equation 4 below.

[Equation 4]

$$\mathbf{H_P^{-1}} = \mathbf{V^{-H}\Sigma^{-1}} = (\mathbf{V\Sigma})\mathbf{\Sigma^{-2}} = \mathbf{H_P^H\Sigma^{-2}}$$

Specifically, the RU may perform SVD for an estimated channel H. A transpose of a left singular vector matrix U obtained as a result of performing the SVD may be applied as a port combining weight. The RU may transmit a value y' obtained by multiplying a received signal y by a port combining filter to the DU. The DU that has received y' may perform channel estimation for the received value. $H_p$ corresponding to a result value of the estimation may be $U^H H$. Here, since $H = U\Sigma V^H$, the corresponding value may be expressed as $H_p = \Sigma V^H$. Since V is a unitary matrix, an inverse matrix and a Hermitian matrix thereof are identical and thus the relationship $V^{-H} = V$ may hold. A diagonal singular value matrix $\Sigma$ may be identified through a multiplication operation of $H_p$ and $H_p$ that is the Hermitian matrix thereof as shown in $H_p H_p^H = \sum V^H V \sum^H = \sum^2$. In this case, since an inverse operation for a diagonal matrix requires performing division operations corresponding to the number of diagonal elements, a required amount of calculation may be very low. That is, instead of using Cholesky decomposition and forward/backward substitution operations conventionally used to obtain an inverse matrix, only a Hermitian operation of $H_p$ obtained through CE and an inverse operation of the diagonal matrix $\Sigma$ may be performed. As a result, in a case of SVD-based port combining, low-complexity channel matrix inversion may be performed.

The meaning of each variable is as follows.

- $H_p$: A channel matrix multiplied by a port combining weight
- U: A left singular vector matrix
- $\sum$: A diagonal singular value matrix
- V: A right singular vector matrix

In order to use low-complexity matrix inversion, the DU needs to know a port combining method used in the RU. If

the DU is unable to know which port combining the RU has used, it is not possible to determine whether a low-complexity matrix inversion process is usable in the DU. If the DU is unable to know a port combining method used in the RU, the DU performs a matrix inversion process with high computational complexity, instead of low-complexity matrix inversion.

According to the current O-RAN standard, there is no indication for a port combining method from the RU. Therefore, the disclosure below proposes a method for indicating a port combining method used in the RU to the DU.

In addition, the RU may transmit a singular value calculated in a process of performing SVD in the RU to the DU. When the singular value is transmitted to the DU, the operation of obtaining a diagonal singular value matrix in the DU may be omitted, and thus the computational complexity in the DU may be reduced. Therefore, the disclosure proposes a method of transmitting a singular value from the RU to the DU.

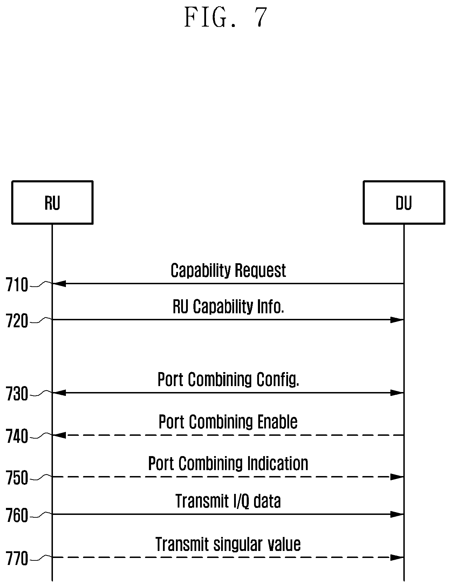

FIG. 7 is a diagram illustrating a process of port combining signaling between an RU and a DU according to an embodiment of the disclosure.

According to FIG. 7, in operation 710, a DU may transmit a capability request message related to port combining to an RU.

In operation 720, in response to the capability request message, the RU may transmit a capability information message to the DU. The capability information message may include capability information related to RU port combining.

The capability request message may be transmitted from the RU not only during a process of initial connection between the RU and the DU, but also in an operation after the initial connection. In addition, the capability information message may be transmitted from the DU to the RU not only during a process of initial connection between the RU and the DU, but also in an operation after the initial connection.

In operation 730, the DU may transmit a configuration related to port combining to the RU. In addition, the RU may transmit a configuration related to port combining to the DU. The configuration may include a port combining parameter configured based on capability information. The parameter related to port combining may be used for indicating port combining.

The RU having received the parameter may apply the parameter immediately after the reception. Alternatively, the RU may apply the parameter at a time point designated by the DU. In this case, the DU may transmit, to the RU, information regarding an application time point and whether to apply the parameter through port combining enable. Alternatively, the RU may autonomously determine an application time point and whether to apply the parameter.

In operation 740, the DU may transmit a port combining enabling signal to the RU. The port combining enabling signal may activate or deactivate the port combining configuration in the RU according to whether applying port combining is possible. In addition, the port combining enabling signal may include whether the parameter included in the configuration has been applied.

For example, the DU may turn on an enable signal in the case of single user scheduling, and turn off same in the case of multi-user scheduling, in consideration of a SVD capability of the RU. In the case of single user scheduling, the DU may transmit an enable signal so that SVD port combining is performed only in a particular resource according to an SVD performance capability of the RU.

This operation is optional and, without performing the operation, in the process of transmitting and receiving a port combining configuration, a port combining enabling signal may be included in the configuration to be transmitted and received.

In operation 750, the RU may transmit a port combining indication signal to the DU. The RU may perform port combining by applying the configuration configured by the DU, and then inform the DU of whether port combining has been performed through a port combining indication signal. Alternatively, the RU may transmit an indication signal to indicate an acknowledgement (ACK) or a negative acknowledgement (NACK) for a resource designated by the DU. Alternatively, the RU may transmit an indication signal indicating whether SVD port combining has been applied in response to the port combining enabling signal of the DU. Alternatively, even if there is no request from the DU, the RU may apply SVD port combining through an autonomous determination and then transmit an indication signal indicating whether the SVD port combining has been applied.

The indication may be configured by a bit indicating whether a port combining configuration has been applied. The indication may be transmitted after being additionally included in a predefined message transmitted from the RU to the DU, or a separate message for the indication may be defined. Alternatively, the indication may indicate whether SVD has been applied by using a port combining configuration proposed below. In addition, in the disclosure, a method of transmitting an indication from the RU to the DU is described as an example, but in the case of transmitting a signal to which SVD has been applied from the DU to the RU, a method of transmitting an indication from the DU to the RU may also be used. In addition, the operation of transmitting the indication may be optionally performed.

In operation 760, the RU may transmit a signal to the DU. The signal may be a signal to which SVD port combining has been applied. The signal may correspond to a message including I/Q data.

In operation 770, if the RU uses an SVD-based port combining method, the RU may transmit a singular value to the DU. When the singular value is transmitted to the DU, the amount of computation required for calculation of the singular value in the DU may be reduced, thereby reducing the computational complexity.

When the singular value is not received, the DU may perform the matrix inversion process described above with reference to FIG. 6. Specifically, the DU may perform an H*hermitian(H) operation for a channel H obtained by a channel estimator to determine a squared value of the singular value. Specifically, the singular value may correspond to a diagonal element value of $\Sigma$ corresponding to a diagonal singular value matrix.

In contrast, the DU that has received a singular value from the RU is able to use the singular value, and thus may not perform an operation of obtaining a squared value of the diagonal singular value matrix $\Sigma$ through the H*hermitian(H) operation. That is, when the DU receives a singular value, an effect of reducing the amount of computation may be obtained.

This operation is optional and, without performing the operation, in the process of transmitting and receiving a port combining configuration, the DU may transmit a singular value request value to the RU.

The following embodiment proposes a method of transmitting and receiving a port combining capability between the RU and the DU in order to perform port combining.

[Embodiment 1: Transmission of port combining capability through management-plane (M-plane)]

According to an embodiment of the disclosure, the RU may transmit a port combining capability to the DU. Specifically, a port combining capability message may be transmitted through an M-plane as in [Table 1] below. Specifically, the message may be transmitted through o-ran-module-cap (e.g., o-ran-module-cap.yang.module) in the M-plane.

[Table 1]

```
module: o-ran-module-cap
+--rw module-capability
+--ro ru-capabilities
| +--ro ru-supported-category? enumeration
| x--ro number-of-ru-ports? uint8
| +--ro number-of-ru-ports-ul? uint8 ...
| +--ro port-combining-config
| | +--ro method-of-port-combining? Uint16
| | | +--:(svd-port-combining)
| | | | +--ro max-svd-layers? Uint16
| | | | +--ro number-of-svd-engines? Uint16
...
| +--ro ro format-of-iq-sample
| | +--ro dynamic-compression-supported? boolean
| | +--ro realtime-variable-bit-width-supported? Boolean
...
```

Specifically, capability information transmitted through o-ran-module-cap may include a port combining configuration. The port combining configuration may include supportable port combining methods (e.g., method-of-port-combining). Alternatively, the port combining configuration may include information regarding whether the RU is capable of performing port combining. The port combining methods may include SVD-based port combining (e.g., svd-port-combining). When a SVD-based port combining method is used, at least one of a maximum number of supported layers (e.g., max-svd-layers), the number of SVD operation engines (e.g., number-of-svd-engines), and information indicating whether a singular value is transmitted may be included as a specific description for the port combining method. The corresponding pieces of information may be transferred in the form of a parameter.

Alternatively, according to an embodiment of the disclosure, the RU may transmit, to the DU, a capability message including capability information related to RU port combining. Specifically, the capability message may be transmitted in the same manner as in [Table 2] below. The capability message may be transferred as a sub-field value of a field related to beamforming in the O-RAN M-plane.

[Table 2]

```
module: o-ran-module-cap
+--rw module-capability
+--ro beamforming-config
```

(continued)

```
+--ro per-band-config* [band-number]
| +--ro band-number -> /mcap:module-capability/band-capabilities/band-number
| +--ro tx-array* -> /up:user-plane-configuration/tx-arrays/name
| +--ro rx-array* -> /up:user-plane-configuration/rx-arrays/name
| +--ro static-properties
| | +--ro rt-bf-weights-update-support? boolean
| | +--ro rt-bf-weights-update-support? boolean
| | +--ro (beamforming-type)?
| | | +--:(frequency)
| | | | +--ro frequency-domain-beams
| | | | +--ro max-number-of-beam-ids uint16
| | | | +--ro initial-beam-id uint16
| | | | +--ro compression-type enumeration
| | | | +--ro bitwidth? uint8
...
| | | +--:(time)
| | | +--:(hybrid)
| | | +--:(port-combining)
| | | | +--ro method-of-port-combining? Uint16
| | | | | +--:(svd-port-combining)
| | | | | | +--ro max-svd-layers? Uint16
| | | | | | +--ro number-of-svd-engines? Uint16
...
```

Specifically, capability information transmitted through o-ran-module-cap may include a port combining configuration. The port combining configuration may include supportable port combining methods (e.g., method-of-port-combining). Alternatively, the port combining configuration may include information regarding whether the RU is capable of performing port combining. The port combining methods may include SVD-based port combining (e.g., svd-port-combining). When a SVD-based port combining method is used, at least one of a maximum number of supported layers (e.g., max-svd-layers), the number of SVD operation engines (e.g., number-of-svd-engines), and information indicating whether a singular value is transmitted may be included as a specific description for the port combining method. The corresponding pieces of information may be transferred in the form of a parameter.

A capability message including capability information related to RU port combining may be transmitted through the M-plane as in [Table 1] or [Table 2] above. However, the capability information transmission scheme is not limited to the above-described schemes, and may be transmitted in other schemes.

The capability information may be included in a capability report message and transmitted in response to the capability request message transmitted by the DU to the RU in operation 710. The DU may receive port combining capability information of the RU in a process of initial connection to the RU. In addition, the DU may transmit a request message even in an operation after the initial connection. In addition, the RU may receive capability information in response thereto.

The following embodiment proposes a port combining configuration transmitted and received between the RU and the DU and transmitted to the RU in order to perform port combining. In addition, the disclosure proposes the following information as a port combining configuration transmitted from the DU to the RU or from the RU to the DU. The following information may be transmitted by the RU to the DU to indicate whether SVD port combining has been applied.

[Embodiment 2: Transmission of port combining configuration through control-plane - Use of Section Extension of Section Type 1]

According to an embodiment of the disclosure, the RU may transmit a configuration related to port combining to the DU. In addition, the RU may transmit a configuration related to port combining to the DU. Specifically, the configuration related to port combining (hereinafter, a port combining configuration) may include at least one of the pieces of information included in the port combining capability information in Embodiment 1. The port combining configuration may be transmitted through a C-plane.

A port combining configuration may be configured based on a parameter defined for SVD-based port combining

in Section Extensions of Section Type 1. Specifically, a new extension type (e.g., exType) may be added to Section Extensions, and the extension type may indicate SVD-based port combining (e.g., SVD port combining). The extension type indicating SVD-based port combining may indicate parameters related to SVD-based port combining.

[Table 3] below shows the existing Section Type 1: DL/UL control messages.

[Table 3]

| Section Type 1: DL/UL control msgs | | | | | | | | | |
|---|---|---|---|---|---|---|---|---|---|
| 0 (msb) | 1 | 2 | 3 | 4 | 5 | 6 | 7 (lsb) | # of bytes | |
| transport header, see clause 5.1.3 | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | startSymbolId | | | | | | 1 | Octet 12 |
| numberOfsections | | | | | | | | 1 | Octet 13 |
| sectionType = 1 | | | | | | | | 1 | Octet 14 |
| udCompHdr | | | | | | | | 1 | Octet 15 |
| reserved | | | | | | | | 1 | Octet 16 |
| sectionId | | | | | | | | 1 | Octet 17 |
| sectionId | | | | rb | symInc | startPrbc | | 1 | Octet 18 |
| startPrbc | | | | | | | | 1 | Octet 19 |
| numPrbc | | | | | | | | 1 | Octet 20 |
| reMask[11:4] | | | | | | | | 1 | Octet 21 |
| reMask[3:0] | | | | numSymbol | | | | 1 | Octet 22 |
| ef = 1 | beamId[14:8] | | | | | | | 1 | Octet 23 |
| beamId[7:0] | | | | | | | | 1 | Octet 24 |
| Section Extensions as indicated by "ef" | | | | | | | | var | Octet 25 |
| ... | | | | | | | | | |

[Table 4] below shows a case in which a new extension type is added to Section Extensions according to [Table 3] above and indicates SVD (based) port combining according to an embodiment of the disclosure.

[Table 4]

| extType | meaning | extLen | extension parameters | octets | meaning |
|---|---|---|---|---|---|
| 0 | reserved | 1 (1 word) | reserved<br>reserved | 1<br>1 | for future use<br>for future use |
| 1 | beamforming weights | var | bfwCompHdr<br>bfwCompParam<br>bfwI (for TRX 0)<br>bfwQ (for TRX 0)<br>...<br>bfwI (for last TRX)<br>bfwQ (for last TRX) | 1<br>1<br>var<br>var<br><br>var<br>var | IqWidth(3:0) compMeth(3:0)<br>depends on compr. method<br>beamforming weight I value<br>beamforming weight Q value<br><br>beamforming weight I value<br>beamforming weight Q value |
| 2 | beamforming attributes | var | bfaCompHdr<br>bfAzPt | 2<br>var | BF attributes compr. header<br>BF azimuth pointing param |
| | | ... | | ... | |
| 23 | Multiple symbol modulation compression parameters | var | numSymPrbPattern<br>symMask<br>prbPattern<br>numMcScaleOffset<br>mcScaleReMask<br>csf | 4b<br>14b<br>4b<br>4b<br>12b<br>1b | number of symbol and resource block pattern<br>symbol mask part of symPrbPattern<br>physical resource block pattern part of symPrbPattern<br>number of modulation compression scaling value per symPrbPattern<br>modulation compression power scale RE mask<br>constellation shift flag |
| 24-127 | reserved | 1 (1 word) | reserved<br>reserved | 1<br>1 | for future use<br>for future use |
| 24 | SVD Port Combining | | Details are described at next slide... | | |

When a new extension type indicating SVD-based port combining is defined, the port combining configuration may include the following section extension parameter.

The section extension parameter may include, in addition to the parameter mentioned in the embodiment of the M-plane (e.g., at least one of supported port combining methods, information regarding whether the RU is capable of performing port combining, a maximum number of supportable layers, the number of SVD operation engines, and information indicating whether a singular value is transmitted), at least one of the number of antenna ports of the RU (the antenna ports may mean logical antenna ports), the number of reduced ports determined in consideration of the fronthaul capacity, a ratio between the number of antennas applied to port combining and the number of reduced ports, a used port combining method, whether port combining is applied, a value of a port combining weight value (e.g., in-phase and quadrature-phase values), whether compression is applied to a port combining weight, a value of a port combining weight after compression (e.g., in-phase and quadrature-phase values), a compression bit-width of a port combining weight, a resource to which port combining is applied, a repetition indication indicating whether a configuration value is the same as that of a previous configuration in order to improve a field read speed and a processing speed of the RU, port combining weight extension, a port combining weight extension type, whether switching is performed, and a singular value.

The number of antenna ports of the RU may be defined as *numLogicalAntPort*, for example, and may have a value of 64, 128, 512, 1024, or the like. The number of reduced ports determined in consideration of the fronthaul capacity may be defined as, for example, *numReducedPort*, and may have a value of 4, 8, 16, or the like. The ratio between the number of antennas applied to port combining and the number of reduced ports may be defined, for example, as *PortCombiningRatio* and may have a value of 2:1, 4:1, 8:1, or the like. The *numReducedPort* value may be replaced with a *PortCombiningRatio* value. The used port combining method may be defined as, for example, *PortCombiningMethod*, and may have a value of MRC, SVD, DFT, none, or the like. In a case where the used port combining method is SVD, a low-complexity scheme may be used for an inverse matrix operation. The port combining weight may be defined as, for example, *PortCombiningWeight*. If the port combining weight is in phase, the port combining weight may be defined as *pcwI,* for example, and if the port combining weight is in quadrature phase, the port combining weight may be defined as *pcwQ*, for example. The port combining weight may be defined under the assumption that the DU calculates and transmits a corresponding value to the RU. Whether compression is applied to a port combining weight may be defined, for example, as *PortCombiningWeightCompression*. If *PortCombiningWeightCompression* is defined, the same operation as weight compression in beamforming may be performed. When weight compression is performed, for example, a value or a parameter such as *pcwCompHdr* or *pcwCompParam* may be defined. The singular value may be defined as, for example, *SingularValue*. The singular value may be defined under the assumption that the RU transmits a singular value instead of the DU calculating the singular value. The resource to which port combining is applied may have a value of *PortCombiningRB, PortCombiningRE, PortCombiningSymb*, or the like. Each value may be defined to indicate which resource port combining is applied to. The repetition indication may be defined as *Repetition*, for example, and when a corresponding value is 0b, a previous configuration is used without change, and thus a parameter is not read again, thereby shortening the computation time. Whether switching is performed corresponds to a value for indicating whether a combining method is switched, and may be defined as *Switching*. If a Repetition value is 1 and a Switching value is also 1, only a port combining method is switched, and thus other parameters need not be read, thereby shortening the computation time. In the remaining cases except for the case in which the Repetition value is 1 and the Switching value is also 1, it may be necessary to read all other fields.

In order to identify whether port combining weight extension is used, for example, *PortCombiningWeightExtension* may be defined. If a value of *PortCombiningWeightExtension* is 1, extension may be used. In order to identify a type of port combining weight extension, *typePortCombingWeightExtension* may be defined, and may have a value of orthogonal, partial orthogonal, or the like. Parameters related to port combining weight extension and a type combining weight extension type may be integrated into the port combining method parameter. Among the parameters, at least one of the port combining weight including an in-phase case and a quadrature-phase case, whether compression is applied to a port combining weight, a value for a case where weight compression is performed (e.g., at least one of *pcwCompHdr* and *pcwCompParam*), the resource to which port combining is applied (e.g., at least one of *PortCombiningRB, PortCombiningRE,* and *PortCombiningSymb*) may be transmitted from the DU to the RU.

Among the parameters, the singular value may be transmitted from the RU to the DU.

At least one of the other parameters, such as the number of antenna ports, the number of reduced ports determined in consideration of the fronthaul capacity, the ratio between the number of antennas applied to port combining and the number of reduced ports, the used port combining method, the repetition indication, and whether switching is performed, may be transmitted from the RU to the DU. Additionally, same may be transmitted from the DU to the RU.

A configuration related to port combining may be transmitted by the DU to the RU in operation 730. In addition, the configuration related to port combining may be transmitted by the RU to the DU in operation 730.

The following embodiment proposes a port combining configuration transmitted and received between the RU and the DU and transmitted to the RU in order to perform port combining. In addition, the disclosure proposes the following information as a port combining configuration transmitted from the DU to the RU or from the RU to the DU. The following

information may be transmitted by the RU to the DU to indicate whether SVD port combining has been applied.

[Embodiment 3: Transmission of port combining configuration through C-plane - Use of dt4CmdType of Section Type 4]According to an embodiment of the disclosure, the RU may transmit a configuration related to port combining to the DU. In addition, the RU may transmit a configuration related to port combining to the DU. Specifically, a port combining configuration may include at least one of the pieces of information included in the port combining capability information in Embodiment 1. The port combining configuration may be transmitted through a C-plane.

A port combining configuration may be configured based on a parameter defined for SVD-based port combining in st4CmdType of Section Type 4. Here, st4CmdType may refer to a parameter that designates a unique command type value designating a slot level to be applied to a single or multiple IDs. Specifically, a new type (e.g., ST4CmdType) may be added to st4CmdType, and the type may indicate SVD-based port combining.

The type indicating SVD-based port combining may indicate parameters related to SVD-port combining. The parameter related to SVD-port combining may include a parameter for commanding transmission of at least one of an SVD-based port combining-related configuration and port combining weights.

[Table 5] below shows the existing Section Type 4: Command common header format.

[Table 5]

| Section Type 4: Command common header format | | | | | | | | | |
|---|---|---|---|---|---|---|---|---|---|
| 0 (msb) | 1 | 2 | 3 | 4 | 5 | 6 | 7 (lsb) | # of bytes | |
| st4CmdType = 1 | | | | | | | | 1 | Octet 17 |
| st4CmdLen | | | | | | | | 1 | Octet 18 |
| st4CmdLen | | | | | | | | 1 | Octet 19 |
| numSlots | | | | | | | | 1 | Octet 20 |
| ackNackReqId | | | | | | | | 2 | Octet 21 |
| reserved | | | | | | | | 2 | Octet 23 |

[Table 6] below shows a case in which, according to an embodiment of the disclosure, in a case of st4CmdType=1 according to [Table 5] above, a new command type is added to st4CmdType and indicates SVD-based port combining.

Referring to [Table 6] below, a port combining configuration may be configured based on a parameter defined for SVD-based port combining in st4CmdType of section type 4. Specifically, a new type (e.g., ST4CmdType) may be added to st4CmdType, and the type may indicate SVD-based combining. The type indicating SVD-based port combining may indicate parameters related to SVD-based port combining.

For example, with reference to the table below, when a new field is configured to be 0000 0011b, SVD-based port combining may be indicated. If SVD-based port combining is indicated, transmission of a port combining configuration and/or a port combining weight may be indicated.

[Table 6]

| ST4CmdType | ST4CmdType definition | ST4CmdType meaning |
|---|---|---|
| 0000 0001b | TIME_DOMAIN_BEAM_CONFIG | Command to send time-domain beam group uniquely identifying time-domain beam number vector and/or associated time-domain beamforming weights |
| 0000 0010b | TDD_CONFIG_PATTERN | Command specifying symbol direction: UL/DL and the guard symbols (DL->UL switch), meant for dynamic TDD configurations use cases. |
| 0000 0000b. 0000 0011b ~ 1111 1111b | reserved for future command types | |
| 0000 0011b | PORT_COMB_CONFIG | Command to send SVD-based port combining related configuration and/or port combining weights |

[Table 7] below shows a port combining configuration when st4CmdType indicates SVD-based port combining. According to [Table 7] below, the port combining configuration may include at least one of PortCombiningType, at least one singular value (firstSingularValue, secondSingularValue, ...), and a compression header.

[Table 7]

| st4CmdType 'PORT_COMB_CONFIG' | | | | | | | | | |
|---|---|---|---|---|---|---|---|---|---|
| 0 (msb) | 1 | 2 | 3 | 4 | 5 | 6 | 7 (lsb) | # of bytes | |
| transport header, see clause 5.1.3 | | | | | | | | 8 | Octet 1 |
| Section Type 4 section header | | | | | | | | 8 | Octet 9 |
| Section Type 4 common part of the command header | | | | | | | | 8 | Octet 17 |
| reserved | | symbolMask[13:8] | | | | | | 1 | Octet 25 |
| symbolMask[7:0] | | | | | | | | 1 | Octet 26 |
| disablePortComb | PortCombiningType | | | | | | | 1 | Octet 27 |
| FirstSingularValue, SecondSingularValue ... | | | | | | | | 1 | Octet 28 |
| pcwCompHdr | | | | | | | | 1 | Octet 29 |
| reserved | | | | | | | | 3 | Octet 30 |

A configuration related to port combining may be transmitted by the DU to the RU in operation 730. In addition, the configuration related to port combining may be transmitted by the RU to the DU in operation 730.

The following embodiment proposes a port combining configuration transmitted and received between the RU and the DU and transmitted to the RU in order to perform port combining. In addition, the disclosure proposes the following information as a port combining configuration transmitted from the DU to the RU or from the RU to the DU. The following information may be transmitted by the RU to the DU to indicate whether SVD port combining has been applied.

[Embodiment 4: Transmission of port combining configuration through C-plane or User plane (U-plane) - Use of udCompMeth of Section Type 1 ]According to an embodiment of the disclosure, the RU may transmit a configuration related to port combining to the DU. In addition, the RU may transmit a configuration related to port combining to the DU. Specifically, a port combining configuration may include at least one of the pieces of information included in the port combining capability information in Embodiment 1. The port combining configuration may be transmitted through a C-plane or U-plane.

[Table 8] below shows the existing Section Type 1: DL/UL I/Q data msgs.

[Table 8]

| Section Type 1,3 : DL/UL IQ data msgs | | | | | | | | | |
|---|---|---|---|---|---|---|---|---|---|
| 0 (msb) | 1 | 2 | 3 | 4 | 5 | 6 | 7 (lsb) | # of bytes | |
| transport header, see clause 5.1.3 | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | symbolid | | | | | | 1 | Octet 12 |
| sectionId | | | | | | | | 1 | Octet 13 |
| sectionId | | | | rb | symInc | startPrbu | | 1 | Octet 14 |
| startPrbu | | | | | | | | 1 | Octet 15 |
| numPrbu | | | | | | | | 1 | Octet 16 |
| udCompHdr (not always present) | | | | | | | | 0/1 | Octet 17 |
| reserved (not always present) | | | | | | | | 0/1 | Octet 18 |
| udCompLen (not always present) | | | | | | | | 0/2 | Octet 17/19 |
| udCompParam (not always present) | | | | | | | | 0/1/2 | Octet 17/19/21 |
| iSample (1st RE in the PRB) | | | | | | | | 1* | K=17/19/20/21/23 |
| qSample (1st RE in the PRB) | | | | | | | | 1* | K+1* |
| ... | | | | | | | | | |
| iSample (12th RE in the PRB) | | | | | | | | 1* | K+22* |
| qSample (12th RE in the PRB) | | | | | | | | 1* | K+23* |
| udCompParam (not always present) | | | | | | | | 0/1/2 | K+24* |
| iSample (1st RE in the PRB) | | | | | | | | 1* | K+24/25/26* |
| qSample (1st RE in the PRB) | | | | | | | | 1* | K+25/26/27* |
| ... | | | | | | | | | |
| iSample (12th RE in the PRB) | | | | | | | | 1* | K+46/47/48* |
| qSample (12th RE in the PRB) | | | | | | | | 1* | K+47/48/49* |
| ... | | | | | | | | | |

[Table 9] below shows a case in which a new udCompMeth is added to udCompHdr according to [Table 8] above and indicates SVD (based) port combining according to an embodiment of the disclosure.

Referring to [Table 9] below, a port combining configuration may be defined in udCompHdr of Section Type 1.

Here, udCompHdr is provided to the U-plane, and may refer to information indicating a method of interpreting and decompressing received U-plane data to the RU and the DU. Specifically, a new method (e.g., udCompMeth) may be added to udCompHdr, and the method may indicate SVD-based port combining (e.g., SVD port combining). The method indicating SVD-based port combining may indicate parameters related to SVD-based port combining.

For example, with reference to the table below, when a new field is configured to be 0111b, SVD-based port combining (e.g., SVD port combining) may be indicated.

[Table 9]

| 0 (msb) | 1 | 2 | 3 | 4 | 5 | 6 | 7 (lsb) | Number of Octets | |
|---|---|---|---|---|---|---|---|---|---|
| udIqWidth | | | | udCompMeth | | | | 1 | Octet 1 |

| udCompMeth | compression method | udIqWidth meaning |
|---|---|---|
| 0000b | no compression | bitwidth of each uncompressed I and Q value |
| 0001b | block floating point (BFP) | bitwidth of each I and Q mantissa value |
| 0010b | block scaling | bitwidth of each I and Q scaled value |
| 0011b | μ-law | bitwidth of each compressed I and Q value |
| 0100b | modulation compression | bitwidth of each compressed I and Q value |
| 0101b | BFP + selective RE sending | bitwidth of each compressed I and Q value |
| 0110b | mod-compr + selective RE sending | bitwidth of each compressed I and Q value |
| 0111b – 1111b | reserved for future methods | depends on the specific compression method |
| 0111b | SVD Port Combining | |

A configuration related to port combining may be transmitted by the DU to the RU in operation 730. In addition, the configuration related to port combining may be transmitted by the RU to the DU in operation 730.

The following embodiment proposes a port combining configuration transmitted and received between the RU and the DU and transmitted to the RU in order to perform port combining. In addition, the disclosure proposes the following information as a port combining configuration transmitted from the DU to the RU or from the RU to the DU. The following information may be transmitted by the RU to the DU to indicate whether SVD port combining has been applied.

[Embodiment 5: Transmission of port combining configuration through C-plane or U-plane - Use of ciCompHdr of Section Type 6]

According to an embodiment of the disclosure, the RU may transmit a configuration related to port combining to the DU. In addition, the RU may transmit a configuration related to port combining to the DU. Specifically, a port combining configuration may include at least one of the pieces of information included in the port combining capability information in Embodiment 1. The port combining configuration may be transmitted through a C-plane or U-plane.

[Table 10] below shows the existing Section Type 6: channel information frame format.

[Table 10]

| Section Type 6: channel information conveyance | | | | | | | | | |
|---|---|---|---|---|---|---|---|---|---|
| 0 (msb) | 1 | 2 | 3 | 4 | 5 | 6 | 7 (lsb) | # of bytes | |
| transport header, see clause 5.1.3 | | | | | | | | 8 | Octet 1 |
| dataDirection | payloadVersion | | | filterIndex | | | | 1 | Octet 9 |
| frameId | | | | | | | | 1 | Octet 10 |
| subframeId | | | | slotId | | | | 1 | Octet 11 |
| slotId | | startSymbolId | | | | | | 1 | Octet 12 |
| numberOfsections | | | | | | | | 1 | Octet 13 |
| sectionType = 6 | | | | | | | | 1 | Octet 14 |
| numberOfUEs | | | | | | | | 1 | Octet 15 |
| ciCompHdr | | | | | | | | 1 | Octet 16 |
| ef | ueId[14:8] | | | | | | | 1 | Octet 17 |
| ueId[7:0] | | | | | | | | 1 | Octet 18 |
| regularizationFactor | | | | | | | | 2 | Octet 19 |
| reserved | | | | rb | symInc | startPrbc | | 1 | Octet 21 |
| startPrbc | | | | | | | | 1 | Octet 22 |
| numPrbc | | | | | | | | 1 | Octet 23 |
| ciCompParam (for the first PRB or all PRBs of the first UE, not always present) | | | | | | | | var | Octet 24 |
| ciIsample (first PRB, first antenna) | | | | | | | | var | |
| ciQsample (first PRB, first antenna) | | | | | | | | var | |
| ciIsample (first PRB, second antenna) | | | | | | | | var | |
| ciQsample (first PRB, second antenna) | | | | | | | | var | |
| ... | | | | | | | | | |

[Table 11] below shows a case in which a new ciCompMeth is added to ciCompHdr according to [Table 10] above and indicates SVD (based) port combining according to an embodiment of the disclosure.

Referring to [Table 11] below, a port combining configuration may be defined in ciCompHdr of Section Type 1. Here, ciCompHdr is provided to the U-plane, and may refer to information indicating a method of interpreting and decompressing received U-plane data to the RU and the DU. Specifically, a new method (e.g., ciCompMeth) may be added to ciCompHdr, and the method may indicate SVD-based port combining (e.g., SVD port combining). The method indicating SVD-based port combining may indicate parameters related to SVD-based port combining.

For example, with reference to the table below, when a new field is configured to be 0111b, SVD-based port combining (e.g., SVD port combining) may be indicated.

[Table 11]

| 0 (msb) | 1 | 2 | 3 | 4 | 5 | 6 | 7 (lsb) | Number of Octets | |
|---|---|---|---|---|---|---|---|---|---|
| ciIqWidth | | | | ciCompMeth | | | ciCompOpt | 1 | Octet 1 |

| ciCompMeth | compression method | ciIqWidth meaning |
|---|---|---|
| 000b | no compression | bitwidth of each uncompressed I and Q value |
| 001b | block floating point, | bitwidth of each I and Q mantissa value |
| 010b | block scaling | bitwidth of each I and Q scaled value |
| 011b | μ-law | bitwidth of each compressed I and Q value |
| 100b - 111b | reserved for future methods | depends on the specific compression method |
| 0111b | SVD Port Combining | |

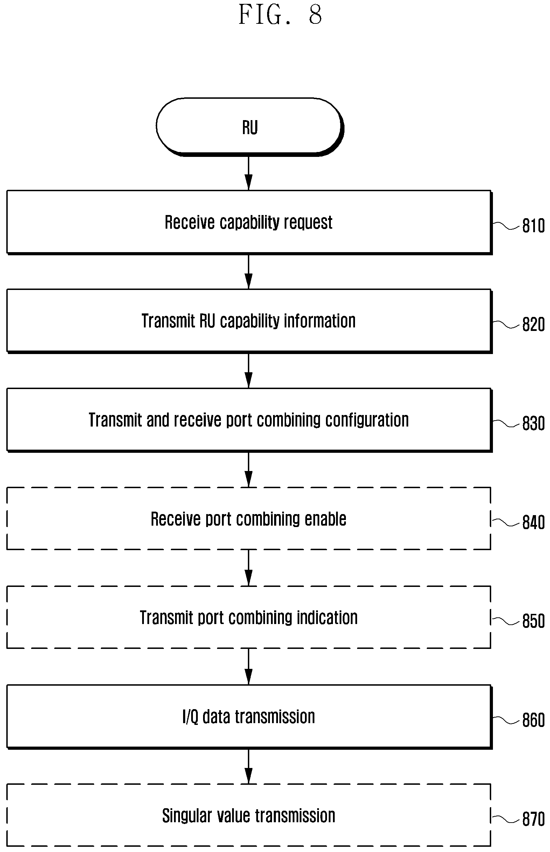

FIG. 8 is a diagram illustrating a port combining signaling process of an RU according to an embodiment of the disclosure.

According to FIG. 8, in operation 810, an RU may receive a capability request message related to port combining from a DU.

In operation 820, in response to the capability request message, the RU may transmit a capability information message to the DU. The capability information message may include capability information related to RU port combining.

The RU may receive, from the DU, the capability request message not only during a process of initial connection between the RU and the DU, but also in a process other than the initial connection. In addition, the RU may transmit, to the DU, the capability information message not only during a process of initial connection between the RU and the DU, but also in a process other than the initial connection.

In operation 830, the RU may transmit a configuration related to port combining to the DU. In addition, the RU may receive a configuration related to port combining from the DU. The configuration may include a port combining parameter configured based on capability information. The parameter related to port combining may be used for indicating port combining.

The RU having received the parameter may apply the parameter immediately after the reception. Alternatively, the RU may apply the parameter at a time point designated by the DU. In this case, the RU may receive, from the DU, information regarding an application time point and whether to apply the parameter through port combining enable. Alternatively, the RU may autonomously determine an application time point and whether to apply the parameter.

In operation 840, the RU may receive a port combining enabling or port combining enable signal from the DU. The port combining enabling or port combining enable signal may activate or deactivate the port combining configuration in the RU according to whether applying port combining is possible. In addition, the port combining enabling or port combining enable signal may include whether the parameter included in the configuration has been applied.

For example, the DU may turn on an enable signal in the case of single user scheduling, and turn off same in the case of multi-user scheduling, in consideration of a SVD capability of the RU. In the case of single user scheduling, the RU may receive an enable signal configured to enable SVD port combining to be performed only in a particular resource according to an SVD performance capability of the RU.

This operation is optional and, without performing the operation, in the process of transmitting and receiving a port combining configuration, a port combining enabling or port combining enable signal may be included in the configuration to be transmitted and received.

In operation 850, the RU may transmit a port combining indication signal to the DU. The RU may perform port combining by applying the configuration configured by the DU and then inform the DU of whether port combining has been performed through a port combining indication signal. Alternatively, the RU may transmit an indication signal to indicate an acknowledgement (ACK) or a negative acknowledgement (NACK) for a resource designated by the DU. Alternatively, the RU may transmit an indication signal indicating whether SVD port combining has been applied in response to the port combining enabling or port combining enable signal of the DU. Alternatively, even if there is no request from the DU, the RU may apply SVD port combining through an autonomous determination and then transmit an indication signal indicating whether the combining has been applied.

The indication may be configured by a bit indicating whether a port combining configuration has been applied. The indication may be transmitted after being additionally included in a predefined message transmitted from the RU to the DU, or a separate message for the indication may be defined. Alternatively, the indication may indicate whether SVD has been applied by using a port combining configuration proposed below. In addition, in the disclosure, a method of transmitting an indication from the RU to the DU is described as an example, but in the case of transmitting a signal to which SVD has been applied from the DU to the RU, a method of transmitting an indication from the DU to the RU may also be used. In addition, the operation of transmitting the indication may be optionally performed.

In operation 860, the RU may transmit a signal to the DU. The signal may be a signal to which SVD port combining has been applied. The signal may correspond to a message including I/Q data.

In operation 870, if the RU uses an SVD-based port combining method, the RU may transmit a singular value to the DU. When the singular value is transmitted to the DU, the amount of computation required for calculation of the singular value in the DU may be reduced, thereby reducing the computational complexity.

This operation is optional and, without performing the operation, in the process of transmitting and receiving a port combining configuration, the DU may transmit a singular value request value to the RU.

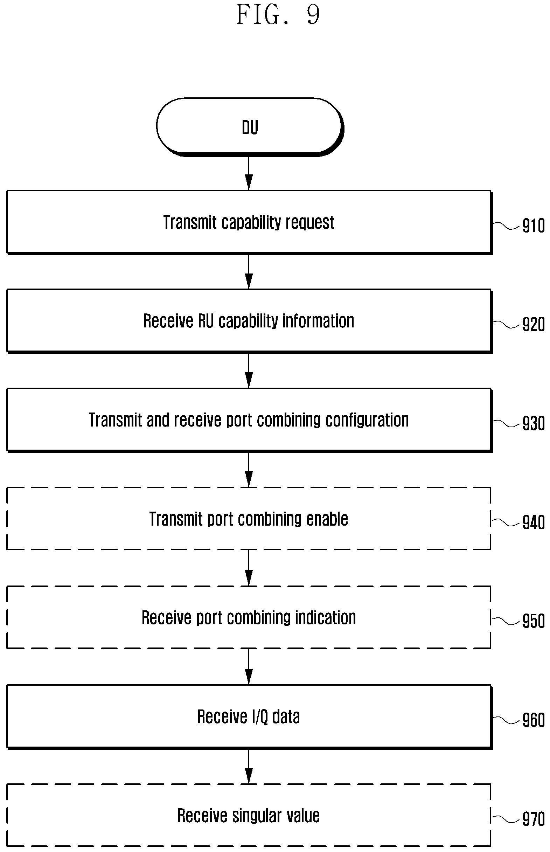

FIG. 9 is a diagram illustrating a port combining signaling process of a DU according to an embodiment of the disclosure.

According to FIG. 9, in operation 910, a DU may transmit a capability request message related to port combining to an RU.

In operation 920, in response to the capability request message, the DU may receive a capability information message from the RU. The capability information message may include capability information related to RU port combining.

The DU may transmit, to the RU, the capability request message not only during a process of initial connection between the RU and the DU, but also in a process other than the initial connection. In addition, the DU may receive, from the RU, the capability information message not only during a process of initial connection between the RU and the DU, but also in a process other than the initial connection.

In operation 930, the DU may transmit a configuration related to port combining to the RU. In addition, the RU may transmit a configuration related to port combining to the DU. The configuration may include a port combining parameter

configured based on capability information. The parameter related to port combining may be used for indicating port combining.

The RU having received the parameter may apply the parameter immediately after the reception. Alternatively, the RU may apply the parameter at a time point designated by the DU. In this case, the DU may transmit, to the RU, information regarding an application time point and whether to apply the parameter through port combining enable. Alternatively, the RU may autonomously determine an application time point and whether to apply the parameter.

In operation 940, the DU may transmit a port combining enabling or port combining enable signal to the RU. The port combining enabling or port combining enable signal may activate or deactivate the port combining configuration in the RU according to whether applying port combining is possible. In addition, the port combining enabling or port combining enable signal may include whether the parameter included in the configuration has been applied.

For example, the DU may turn on an enable signal in the case of single user scheduling, and turn off same in the case of multi-user scheduling, in consideration of a SVD capability of the RU. In the case of single user scheduling, the DU may transmit an enable signal so that SVD port combining is performed only in a particular resource according to an SVD performance capability of the RU.

This operation is optional and, without performing the operation, in the process of transmitting and receiving a port combining configuration, a port combining enabling or port combining enable signal may be included in the configuration to be transmitted and received.

In operation 950, the DU may receive a port combining indication signal from the RU. The port combining indication signal may include whether port combining has been performed in the RU according to application of the configuration configured by the DU. Alternatively, the DU may receive, from the RU, an indication signal to indicate an acknowledgement (ACK) or a negative acknowledgement (NACK) for a resource designated by the DU. Alternatively, the DU may receive, from the RU, an indication signal indicating whether SVD port combining has been applied in response to the port combining enabling or port combining enable signal of the DU. Alternatively, the DU may receive, from the RU, an indication signal indicating whether SVD port combining has been applied according to the application of the SVD port combining by the RU through an autonomous determination.

The indication may be configured by a bit indicating whether a port combining configuration has been applied. The indication may be transmitted after being additionally included in a predefined message transmitted from the RU to the DU, or a separate message for the indication may be defined. Alternatively, the indication may indicate whether SVD has been applied by using a port combining configuration proposed below. In addition, in the disclosure, a method of transmitting an indication from the RU to the DU is described as an example, but in the case of transmitting a signal to which SVD has been applied from the DU to the RU, a method of transmitting an indication from the DU to the RU may also be used. In addition, the operation of transmitting the indication may be optionally performed. In operation 960, the DU may receive a signal from the RU. The signal may be a signal to which SVD port combining has been applied. The signal may correspond to a message including I/Q data.

In operation 970, if the RU uses an SVD-based port combining method, the DU may receive a singular value from the RU. When the DU receives the singular value, the amount of computation required for calculation of the singular value in the DU may be reduced, thereby reducing the computational complexity.

When the singular value is not received, the DU may perform the matrix inversion process described above with reference to FIG. 6. Specifically, the DU may perform an H*hermitian(H) operation for a channel H obtained by a channel estimator to determine a squared value of the singular value. Specifically, the singular value may correspond to a squared value of $\Sigma$ corresponding to a diagonal singular value matrix.

In contrast, the DU that has received a singular value from the RU is able to use the singular value, and thus may not perform an operation of obtaining a squared value of the diagonal singular value matrix $\Sigma$ through the H*hermitian(H) operation. That is, when the DU receives a singular value, an effect of reducing the amount of computation may be obtained.

This operation is optional and, without performing the operation, in the process of transmitting and receiving a port combining configuration, the DU may transmit a singular value request value to the RU.

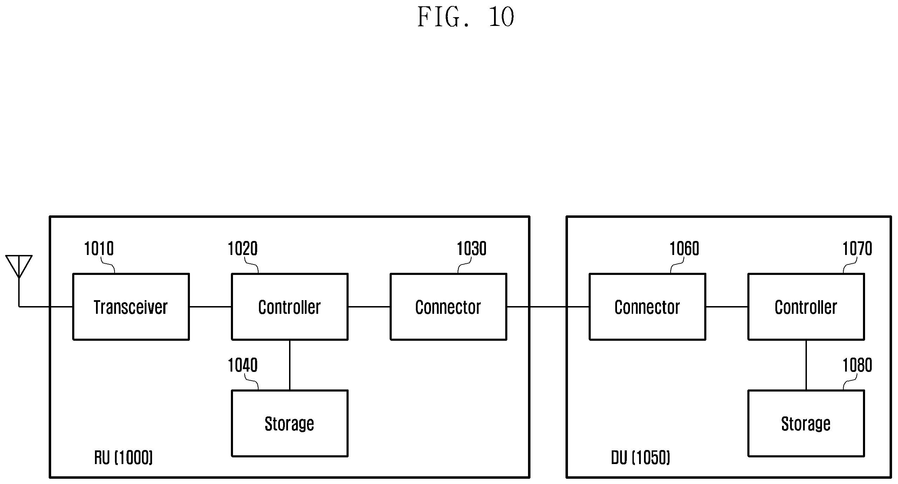

FIG. 10 is a diagram illustrating a device of an RU and a DU in a wireless communication system according to an embodiment of the disclosure. FIG. 10 is a block diagram illustrating a device of an RU and a DU capable of performing the disclosure. Referring to FIG. 10, an RU 1000 includes a transceiver 1010, a controller 820, a connector 1030, and a storage 1040. However, the elements of the RU 1000 are not limited to the above-described example. For example, the RU 1000 may include more or fewer elements than the illustrated elements. In addition, the transceiver 1010, the storage 1030, and the controller 1020 may be implemented in the form of a single chip.

The transceiver 1010 may transmit and receive a signal to and from a UE. The signal may include control information and data. To this end, the transceiver 1010 may include an RF transmitter that up-converts and amplifies a frequency of a transmitted signal, and an RF receiver that low-noise amplifies a received signal and down-converts the frequency thereof. However, this is merely an embodiment of the transceiver 1010, and the elements of the transceiver 1010 are not limited to the RF transmitter and the RF receiver. In addition, the transceiver 1010 may receive a signal

through a wireless channel and output the signal to the controller 1020, and may transmit a signal output from the controller 1020, through a wireless channel. In addition, the transceiver 1010 may include an RF transceiver for an LTE system and an RF transceiver for an NR system separately, or may perform LTE and NR physical layer processing by using one transceiver.

The storage 1040 may store a program and data required for an operation of the RU. In addition, the storage 1040 may store control information or data included in a signal transmitted and received by the RU. The storage 1040 may be configured by a storage medium such as a ROM, a RAM, a hard disk, a CD-ROM, and a DVD, or a combination of storage mediums. Furthermore, multiple storages 1040 may be included.

The controller 1020 may control a series of processes to enable the RU 800 to operate according to an embodiment of the disclosure described above. For example, the controller 820 may perform operations of receiving a port combining configuration from a digital unit (DU), identifying whether to perform singular value decomposition (SVD) port combining, based on the port combining configuration, when the SVD port combining is performed, transmitting an indication indicating the SVD port combining to the DU, and transmitting a signal to which the SVD port combining has been applied to the DU.

The connector 1030 is a device for connecting the RU 1000 and a DU 1050, and may perform operations of performing physical layer processing for message transmission and reception, transmitting a message to the DU 1050, and receiving a message from the DU 1050.

The DU 1050 includes a controller 1070, a connector 1060, and a storage 1080. However, the elements of the DU 1050 are not limited to the above-described example. For example, the DU 1050 may include more or fewer elements than the illustrated elements. In addition, the connector 1060, the storage 1080, and the controller 1070 may be implemented in the form of a single chip.

The controller 1060 may control a series of processes to enable the DU 1050 to operate according to an embodiment of the disclosure described above. For example, the controller 1060 may perform operations of transmitting a port combining configuration to a remote unit (RU), when singular value decomposition (SVD) port combining identified based on the port combining configuration is performed, receiving an indication indicating the SVD port combining from the RU, and receiving a signal to which the SVD port combining has been applied from the DU.

The storage 1040 may store a program and data required for an operation of the RU. In addition, the storage 1040 may store control information or data included in a signal transmitted and received by the RU. The storage 1040 may be configured by a storage medium such as a ROM, a RAM, a hard disk, a CD-ROM, and a DVD, or a combination of storage mediums. Furthermore, multiple storages 1040 may be included.

The connector 1060 is a device for connecting the RU 1000 and a DU 1050, and may perform operations of performing physical layer processing for message transmission and reception, transmitting a message to the RU 1000, and receiving a message from the RU 1000.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, first, second, third, fourth, and fifth embodiments of the disclosure may be partially combined with each other to operate a base station and a terminal.

## Claims

**1.** A method performed by a remote unit (RU) of a base station in a wireless communication system, the method comprising:

receiving, from a digital unit (DU) of the base station, a port combining configuration;
identifying whether to perform singular value decomposition (SVD) port combining, based on the port combining configuration;
in case that the SVD port combining is performed, transmitting, to the DU, an indication indicating the SVD port combining; and

transmitting, to the DU, a signal to which the SVD port combining has been applied,
wherein the indication is used for decoding the signal to which the SVD port combining has been applied.

**2.** The method of claim 1, further comprising:

receiving, from the DU, a capability request message related to port combining; and
transmitting, to the DU, a capability report message including capability information in response to the capability request message,
wherein the capability information comprises information regarding at least one of a supportable port combining method or whether performing port combining is possible.

**3.** The method of claim 1, further comprising transmitting, to the DU, information including at least one of calculated values according to the application of the SVD port combining.

**4.** The method of claim 1, wherein the port combining configuration comprises a port combining parameter including at least one of a used port combining method and the number of reduced ports.

**5.** A method performed by a digital unit (DU) of a base station in a wireless communication system, the method comprising:

transmitting, to a remote unit (RU), a port combining configuration;
in case that singular value decomposition (SVD) port combining identified based on the port combining configuration is performed, receiving, from the RU, an indication indicating the SVD port combining;
receiving, from the RU, a signal to which the SVD port combining has been applied; and
decoding the signal, based on the indication.

**6.** The method of claim 5, further comprising:

transmitting, to the RU, a capability request message related to port combining; and
receiving, from the RU, a capability report message including capability information in response to the capability request message,
wherein the capability information comprises information regarding at least one of a supportable port combining method or whether the RU is capable of performing port combining.

**7.** The method of claim 5, further comprising receiving, from the RU, information including at least one of calculated values according to the application of the SVD port combining.

**8.** The method of claim 5, wherein the port combining configuration comprises a port combining parameter including at least one of a used port combining method and the number of reduced ports.

**9.** A remote unit (RU) of a base station in a wireless communication system, the RU comprising:

a transceiver; and
a controller connected to the transceiver,
wherein the controller is configured to:

receive, from a digital unit (DU), a port combining configuration;
identify whether to perform singular value decomposition (SVD) port combining, based on the port combining configuration;
in case that the SVD port combining is performed, transmit, to the DU, an indication indicating the SVD port combining; and
transmit, to the DU, a signal to which the SVD port combining has been applied, and
wherein the indication is used for decoding the signal.

**10.** The RU of claim 9, wherein the controller is configured to:

receive, from the DU, a capability request message related to port combining; and
transmit, to the DU, a capability report message including capability information in response to the capability

request message, and
wherein the capability information comprises information regarding at least one of a supportable port combining method or whether the RU is capable of performing port combining.

**11.** The RU of claim 9, wherein the controller is configured to transmit, to the DU, information including at least one of calculated values according to the application of the SVD port combining.

**12.** The RU of claim 9, wherein the port combining configuration comprises a port combining parameter including at least one of a used port combining method and the number of reduced ports.

**13.** A digital unit (DU) of a base station in a wireless communication system, the DU comprising:

a transceiver; and
a controller connected to the transceiver,
wherein the controller is configured to:

transmit, to a remote unit (RU), a port combining configuration;
in case that singular value decomposition (SVD) port combining identified based on the port combining configuration is performed, receive, from the RU, an indication indicating the SVD port combining;
receive, from the DU, a signal to which the SVD port combining has been applied; and
decode the signal, based on the indication.

**14.** The DU of claim 13, wherein the controller is configured to:

transmit, to the RU, a capability request message related to port combining; and
receive, from the RU, a capability report message including capability information in response to the capability request message, and
wherein the capability information comprises information regarding at least one of a supportable port combining method or whether the RU is capable of performing port combining.

**15.** The DU of claim 13, wherein the controller is configured to receive, from the RU, information including at least one of calculated values according to the application of the SVD port combining.

**16.** The DU of claim 13, wherein the port combining configuration comprises a port combining parameter including at least one of a used port combining method and the number of reduced ports.

FIG. 1

5G Core
AMF
110
NRT-RIC
100
A1
120
RIC
E2-CP
E2-UP
E2-DU
130
140
E1
O-CU-CP
O-CU-UP
NGAP
F1
150
F1
F1
F1
DU
DU
FH
160
FH
RU
RU
O-RAN gNB

FIG. 2

Fronthaul
UE 1
UE 2
UE 3
H1,1
H2,1
H1,2
H2,2
HN,2
H2,N
HK,N
Massive
MIMO
MMU
Spatial
Comp.
Filter
(F)
qLx1
=
F^H y Mx1
[ L<M ]
DU
s 210
Ps 220
y = HPs + n 230
y' = F^H HPs + F^H n 240
[ NTX × NL ]
[ NRX × NTX ]
[ NC × NRX ]
NL : Number of layers
NTX : Number of transmission antenna ports of UE
NRX : Number of reception antenna ports of O-RU
NC : Number of antenna ports transmitted from O-RU to O-DU, NC ≤ NRX

FIG. 3

$s_{11}(t)$
$s_{12}(t)$
Channel 1
$\alpha_1 e^{-j\psi_1}$
+
$z_1(t)$
Receiver 1
1
$s_{21}(t)$
$s_{22}(t)$
Channel 1
$\alpha_2 e^{-j\psi_2}$
+
$z_2(t)$
Receiver 2
2
Combiner
Output decisions variables
$s_{L1}(t)$
$s_{L2}(t)$
Channel 1
$\alpha_L e^{-j\psi_L}$
+
$z_L(t)$
Receiver L

Received signal $y$
410
RU
RX port combining
SVD-based Port combining
SVD
H from CE
420
$y'=Fy$
DU
Detector
Estimated signal $\hat{y}$

FIG. 4

FIG. 5

RU
DU
Received signal y
RX port combining
Port combining Filter F Gen.
SVD
H from CE
y'
Covariance Intf. + Noise Mtx. Calc.
Cholesky Decomposition
Forward Backward Substitution
ŷ estimation
Estimated signal ŷ

FIG. 6

RU
RX port combining
Port combining Filter F Gen.
SVD
H from CE
Received signal y
y'
DU (in case of RU supporting SVD)
Covariance Intf. + Noise Mtx. Calc.
$H_p$ Inversion
$\hat{y}$ estimation
Estimated signal $\hat{y}$
$H_p$ from CE
(*in case of IRC or ZF)
$H_p^{-1} = H_p^H \Sigma^{-2}$
$H_p^{-1} = V^{-H} \Sigma^{-1} = (V\Sigma)\Sigma^{-2} = H_p^H \Sigma^{-2}$
$H_p H_p^H = \Sigma V^H V \Sigma^H = \Sigma^2$
$H_p = U^H H = \Sigma V^H$

FIG. 7

RU
DU
Capability Request
710
RU Capability Info.
720
Port Combining Config.
730
Port Combining Enable
740
Port Combining Indication
750
Transmit I/Q data
760
Transmit singular value
770

FIG. 8

RU
Receive capability request
810
Transmit RU capability information
820
Transmit and receive port combining configuration
830
Receive port combining enable
840
Transmit port combining indication
850
I/Q data transmission
860
Singular value transmission
870

FIG. 9

DU
Transmit capability request
910
Receive RU capability information
920
Transmit and receive port combining configuration
930
Transmit port combining enable
940
Receive port combining indication
950
Receive I/Q data
960
Receive singular value
970

FIG. 10

RU (1000)

1010 Transceiver

1020 Controller

1030 Connector

1040 Storage

DU (1050)

1060 Connector

1070 Controller

1080 Storage

## INTERNATIONAL SEARCH REPORT

International application No.
**PCT/KR2023/020310**

**A. CLASSIFICATION OF SUBJECT MATTER**

**H04B 7/0417**(2017.01)i; **G06F 17/16**(2006.01)i; **H04W 88/08**(2009.01)i

According to International Patent Classification (IPC) or to both national classification and IPC

**B. FIELDS SEARCHED**

Minimum documentation searched (classification system followed by classification symbols)

H04B 7/0417(2017.01); H04B 7/024(2017.01); H04B 7/0452(2017.01); H04L 25/02(2006.01); H04L 41/0816(2022.01); H04L 41/083(2022.01); H04L 5/00(2006.01); H04W 16/24(2009.01); H04W 24/02(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RU(Remote Unit), DU(Digital Unit), port combining configuration, SVD(Singular Value Decomposition) port combining, indication

**C. DOCUMENTS CONSIDERED TO BE RELEVANT**

| Category* | Citation of document, with indication, where appropriate, of the relevant passages | Relevant to claim No. |
|---|---|---|
| A | KR 10-2023-0095474 A (KT CORPORATION) 29 June 2023 (2023-06-29) See paragraphs [0066] and [0078]; and figures 3 and 5. | 1-16 |
| A | KR 10-2019-0069516 A (HUAWEI TECHNOLOGIES CO., LTD.) 19 June 2019 (2019-06-19) See paragraphs [0080]-[0083]; and figure 2. | 1-16 |
| A | KR 10-2021-0046499 A (SAMSUNG ELECTRONICS CO., LTD.) 28 April 2021 (2021-04-28) See paragraphs [0029]-[0030]; and figures 3-4. | 1-16 |
| A | KR 10-2023-0031695 A (LG UPLUS CORP.) 07 March 2023 (2023-03-07) See paragraphs [0043]-[0045]; and figure 3. | 1-16 |
| A | US 2023-0155864 A1 (MAVENIR SYSTEMS, INC.) 18 May 2023 (2023-05-18) See claims 1-18. | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 September 2024** | **04 September 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/020310**

| Patent document cited in search report | Publication date (day/month/year) | Patent family member(s) | Publication date (day/month/year) |
|---|---|---|---|
| KR 10-2023-0095474 A | 29 June 2023 | None | |
| KR 10-2019-0069516 A | 19 June 2019 | CA 3041151 A1 | 26 April 2018 |
| | | CA 3041151 C | 14 June 2022 |
| | | CN 109076368 A | 21 December 2018 |
| | | CN 109076368 B | 28 July 2020 |
| | | EP 3518430 A1 | 31 July 2019 |
| | | EP 3518430 A4 | 31 July 2019 |
| | | EP 3518430 B1 | 29 July 2020 |
| | | HK 1258663 A1 | 15 November 2019 |
| | | KR 10-2287732 B1 | 06 August 2021 |
| | | US 10673495 B2 | 02 June 2020 |
| | | US 2019-0245589 A1 | 08 August 2019 |
| | | WO 2018-072204 A1 | 26 April 2018 |
| KR 10-2021-0046499 A | 28 April 2021 | None | |
| KR 10-2023-0031695 A | 07 March 2023 | None | |
| US 2023-0155864 A1 | 18 May 2023 | EP 4152639 A1 | 22 March 2023 |

Form PCT/ISA/210 (patent family annex) (July 2022)